(19) Europäisches Patentamt
European Patent Office
Office européen des brevets

(11) **EP 4 009 290 A1**

(12) **EUROPEAN PATENT APPLICATION**

(43) Date of publication:
**08.06.2022 Bulletin 2022/23**

(21) Application number: **21211504.2**

(22) Date of filing: **30.11.2021**

(51) International Patent Classification (IPC):
**G07B 15/02** (2011.01) **G06Q 30/02** (2012.01)

(52) Cooperative Patent Classification (CPC):
**G07B 15/02; G06Q 30/02**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.12.2020 JP 2020200487**

(71) Applicant: **TOYOTA JIDOSHA KABUSHIKI KAISHA**
**Toyota-shi, Aichi-ken, 471-8571 (JP)**

(72) Inventors:
• **NAKASHIMA, Toyokazu**
**TOYOTA-SHI, AICHI-KEN, 471-8571 (JP)**
• **SAGARA, Shunsuke**
**TOYOTA-SHI, AICHI-KEN, 471-8571 (JP)**
• **OKA, Naoya**
**TOYOTA-SHI, AICHI-KEN, 471-8571 (JP)**

(74) Representative: **Cabinet Beau de Loménie**
**158, rue de l'Université**
**75340 Paris Cedex 07 (FR)**

(54) **INFORMATION PROCESSING APPARATUS, PROGRAM, AND INFORMATION PROCESSING METHOD**

(57) An information processing apparatus (1) communicably connected to a vehicle (2) includes a controller configured to, upon detecting a stop of the vehicle, determine information regarding a size of the vehicle, calculate a parking fee according to the information regarding the size of the vehicle, and notify the vehicle or a user terminal to be operated by a driver of the vehicle of the parking fee.

*FIG. 1*

**Description**

TECHNICAL FIELD

The present disclosure relates to an information processing apparatus, a program, and an information processing method.

BACKGROUND

Technology that stores a time when a vehicle is at an entrance to a parking lot, and, in a case in which the vehicle has stopped in the parking lot, estimates the stored time as a billing start time and notifies a user's mobile device of the billing start time is known (e.g., Patent Literature (PTL) 1).

CITATION LIST

Patent Literature

PTL 1: JP 2011-065239 A

SUMMARY

In the above technology, only an elapsed time in the parking lot is taken into account in calculating a parking fee. Therefore, there is room for improvement in a method for calculating the parking fee.
It would be helpful to provide an information processing apparatus, a program, and an information processing method that can flexibly calculate a parking fee according to an occupied area of a vehicle, or the like.
An information processing apparatus according to an embodiment of the present disclosure is communicably connected to a vehicle, the information processing apparatus including a controller configured to:

upon detecting a stop of the vehicle, determine information regarding a size of the vehicle;
calculate a parking fee according to the information regarding the size of the vehicle; and
notify the vehicle or a user terminal to be operated by a driver of the vehicle of the parking fee.

A program according to an embodiment of the present disclosure is configured to cause a computer, as an information processing apparatus communicably connected to a vehicle, to execute operations, the operations including:

upon detecting a stop of the vehicle, determining information regarding a size of the vehicle;
calculating a parking fee according to the information regarding the size of the vehicle; and
notifying the vehicle or a user terminal to be operated by a driver of the vehicle of the parking fee.

An information processing method according to an embodiment of the present disclosure is performed by an information processing apparatus communicably connected to a vehicle, the information processing method including:

upon detecting a stop of the vehicle, determining information regarding a size of the vehicle;
calculating a parking fee according to the information regarding the size of the vehicle; and
notifying the vehicle or a user terminal to be operated by a driver of the vehicle of the parking fee.

According to an image display apparatus, a program, and an image display method of an embodiment of the present disclosure, a parking fee can be flexibly calculated according to an occupied area of a vehicle.

BRIEF DESCRIPTION OF THE DRAWINGS

In the accompanying drawings:

FIG. 1 is a schematic diagram of an information processing system according to an embodiment;
FIG. 2 is a block diagram illustrating a configuration of an information processing apparatus;
FIG. 3 is a block diagram illustrating a configuration of a vehicle;
FIG. 4 is a drawing illustrating parked vehicles;
FIG. 5 is a drawing illustrating a view from inside one of the parked vehicles;

FIG. 6 illustrates a data structure of a fee database (DB);

FIG. 7 illustrates a data structure of a coefficient DB;

FIG. 8 is a drawing illustrating a screen displayed on a user terminal; and

FIG. 9 is a flowchart illustrating operations of the information processing apparatus.

DETAILED DESCRIPTION

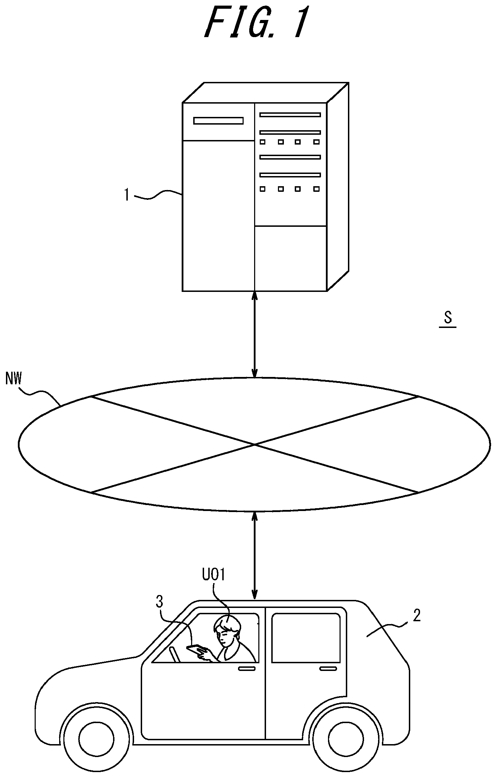

FIG. 1 is a schematic diagram of an information processing system S according to an embodiment. The information processing system S includes an information processing apparatus 1, a vehicle 2, and a user terminal 3, which are communicably connected to one another via a network NW. The network NW includes, for example, a mobile communication network or the Internet.

FIG. 1 illustrates one of the information processing apparatus 1 for convenience of explanation. However, the number of the information processing apparatus 1 is not limited to this. For example, the processing to be executed by the information processing apparatus 1 may be executed by a plurality of distributed information processing apparatuses 1.

The information processing apparatus 1 may be a server configured to assist a provider in providing a service. The information processing apparatus 1 may be, for example, installed in a facility dedicated to the provider or in a shared facility including a data center. As an alternative example, the information processing apparatus 1 may be mounted in the vehicle 2.

The vehicle 2 includes, for example, any type of automobile such as a gasoline vehicle, a diesel vehicle, an HEV, a PHEV, a BEV, or an FCEV. The term "HEV" is an abbreviation of hybrid electric vehicle. The term "PHEV" is an abbreviation of plug-in hybrid electric vehicle. The term "BEV" is an abbreviation of battery electric vehicle. The term "FCEV" is an abbreviation of fuel cell electric vehicle. The vehicle 2 is driven by a driver in the present embodiment. As an alternative example, driving of the vehicle 2 may be automated at any level. The automation level is, for example, any one of Level 1 to Level 5 according to the level classification defined by SAE. The name "SAE" is an abbreviation of Society of Automotive Engineers. The vehicle 2 may be a MaaS-dedicated vehicle. The term "MaaS" is an abbreviation of Mobility as a Service.

The user terminal 3 is a terminal that is in the possession of a user U01 and operated by the user U01. The user terminal 3 may be, for example, a mobile device including a mobile phone, a smartphone, or a tablet.

An outline of processing that is executed by the information processing apparatus 1 according to the present embodiment will be described. Upon detecting a stop of the vehicle 2, the information processing apparatus 1 determines information regarding the size of the vehicle 2, calculates a parking fee according to the information regarding the size of the vehicle 2, and notifies the vehicle 2 or the user terminal 3 to be operated by the driver of the vehicle 2 of the parking fee. With this configuration, the information processing apparatus 1 can flexibly calculate the parking fee according to the information regarding the size of the vehicle 2, for example, an occupied area of the vehicle 2. The parking fee is calculated according to the information regarding the size of the vehicle 2. The information processing apparatus 1 can thereby calculate the parking fee and charge the parking fee to the vehicle 2, even in a place where no parking frame line is drawn. Furthermore, this eliminates the need for drawing a parking frame line, thus reducing an initial capital investment. Thus, the information processing apparatus 1 can assist the general public in conducting parking business.

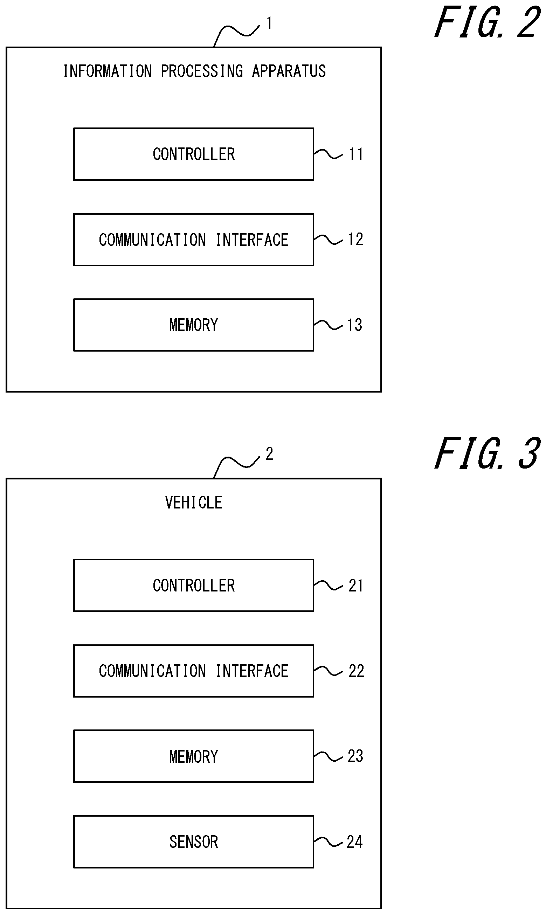

With reference to FIG. 2, an internal configuration of the information processing apparatus 1 will be described in detail.

The information processing apparatus 1 includes a controller 11, a communication interface 12, and a memory 13. The components of the information processing apparatus 1 are communicably connected to one another via, for example, dedicated lines.

The controller 11 includes, for example, one or more general purpose processors including a Central Processing Unit (CPU) or a Micro Processing Unit (MPU). The controller 11 may include one or more dedicated processors that are dedicated to specific processing. The controller 11 may include one or more dedicated circuits instead of the processors. Examples of the dedicated circuits may include a Field-Programmable Gate Array (FPGA) and an Application Specific Integrated Circuit (ASIC). The controller 11 may include an Electronic Control Unit (ECU).

The communication interface 12 includes one or more communication modules for connection to the network that conform to wired or wireless Local Area Network (LAN) standards. The communication interface 12 may include a module conforming to one or more mobile communication standards including the Long Term Evolution (LTE) standard, the 4th Generation (4G) standard, or the 5th Generation (5G) standard. The communication interface 12 may include one or more communication modules conforming to near field communication standards or specifications, including Bluetooth® (Bluetooth is a registered trademark in Japan, other countries, or both), AirDrop® (AirDrop is a registered trademark in Japan, other countries, or both), IrDA, ZigBee® (ZigBee is a registered trademark in Japan, other countries, or both), Felica® (Felica is a registered trademark in Japan, other countries, or both), or RFID. The communication interface 12 transmits and receives any information via the network.

The memory 13 includes, for example, a semiconductor memory, a magnetic memory, an optical memory, or a combination of at least two of these, but is not limited to these. The semiconductor memory is, for example, RAM or ROM. The RAM is, for example, SRAM or DRAM. The ROM is, for example, EEPROM. The memory 13 may function as, for example, a main memory, an auxiliary memory, or a cache memory. The memory 13 may store information resulting from analysis or processing performed by the controller 11. The memory 13 may also store various types of information regarding operations and control of the information processing apparatus 1. The memory 13 may store a system program, an application program, embedded software, and the like. The memory 13 includes a fee DB and a coefficient DB, which will be described later.

With reference to FIG. 3, an internal configuration of the vehicle 2 will be described in detail.

The vehicle 2 includes a controller 21, a communication interface 22, a memory 23, and a sensor 24. The components of the vehicle 2 are communicably connected to one another, for example, via dedicated lines.

Hardware components of the controller 21, the communication interface 22, and the memory 23 may be the same as hardware components of the controller 11, the communication interface 12, and the memory 13 of the information processing apparatus 1, respectively. The explanation here is omitted.

The sensor 24 may be at least one of an image sensor, an accelerometer, and/or a location sensor. The sensor 24 detects the position of the vehicle 2. The sensor 24 can further detect the traveling direction and posture of the vehicle 2. The sensor 24 transmits detected information to the controller 21 as sensor information.

The location sensor, as the sensor 24, includes at least one GNSS receiver. The term "GNSS" is an abbreviation of Global Navigation Satellite System. GNSS includes, for example, at least any of GPS, QZSS, BeiDou, GLONASS, and/or Galileo. The term "GPS" is an abbreviation of Global Positioning System. The term "QZSS" is an abbreviation of Quasi-Zenith Satellite System. QZSS satellites are called quasi-zenith satellites. The term "GLONASS" is an abbreviation of Global Navigation Satellite System. The sensor 24 measures the position of the vehicle 2. A measurement result of the sensor 24 is acquired by the controller 21 as position information on the vehicle 2. "Position information" is information that can identify the position of the vehicle 2, and includes, for example, coordinates.

Hereinafter, processing executed in the information processing system S according to the present embodiment will be described in detail. As an example, a scene in which the vehicle 2 driven by the user U01 has stopped at a parking spot P01 will be hereinafter described. The information processing apparatus 1 may determine whether the vehicle 2 has stopped in a parking spot from one of the following conditions:

- coincidence in position information between the vehicle 2 and the predetermined parking spot, and/or
- coincidence in position information between the vehicle 2, the user terminal 3, and the predetermined parking spot.

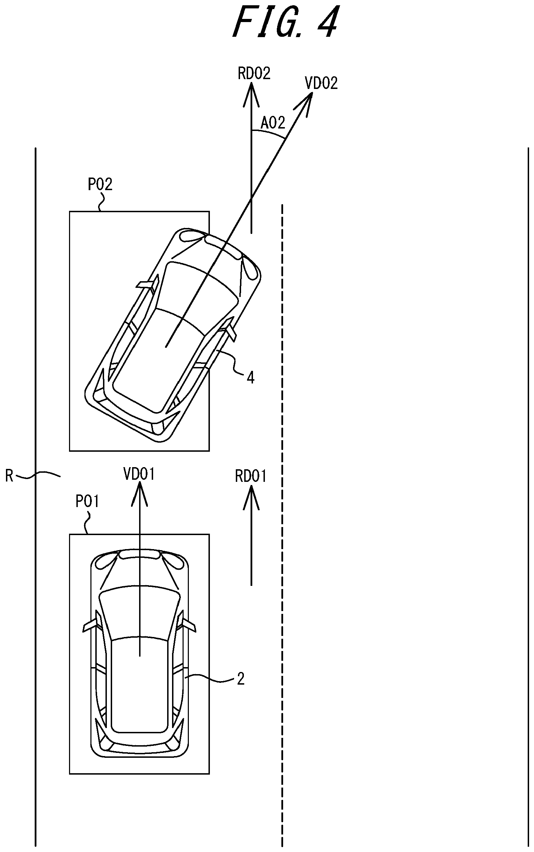

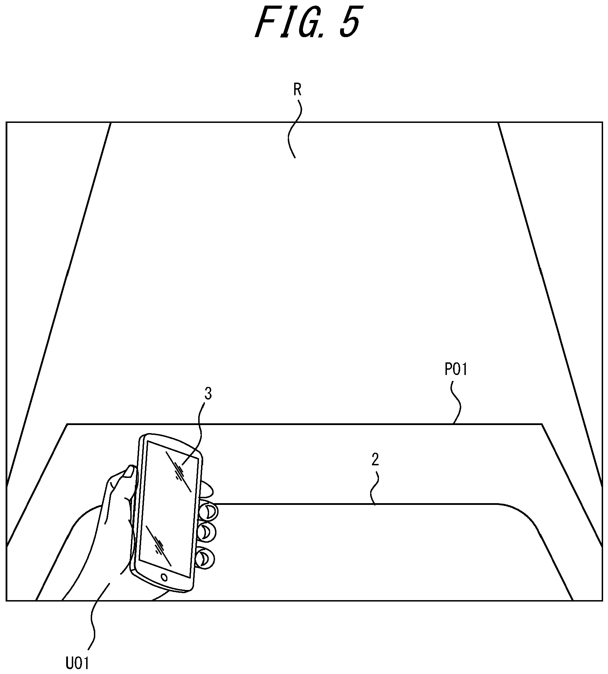

As illustrated in FIG. 4, the information processing apparatus 1 detects that the vehicle 2 has stopped at a parking spot P01 on a road R. A vehicle 4 will be described later. A frame line of the parking spot P01 may be a virtually projected line, or an actually drawn line on the road R. The information processing apparatus 1 determines information regarding the size of the vehicle 2. FIG. 5 illustrates a forward view of the user U01 from inside the vehicle 2.

The information regarding the size of the vehicle 2 is stored in the memory 13. The information regarding the size of the vehicle 2 corresponds to at least one of an occupied area and/or a vehicle type of the vehicle 2. The occupied area corresponds to an area or a volume. The vehicle type indicates the type of the vehicle 2, and may indicate, for example, a bus, a truck, a passenger car, a small truck, a small passenger car, a three-wheel truck, a large motorcycle, a pickup truck, a light passenger car, a motorcycle, a road roller, a bulldozer, an agricultural tractor, a forklift truck, a shovel loader, a minibike, or a motorcycle. Here, as an example, the information regarding the size of the vehicle 2 is the occupied area of the vehicle 2, which is 14 m2. As an alternative example, the information regarding the size of the vehicle 2 may be stored in another storage device, such as the memory 23.

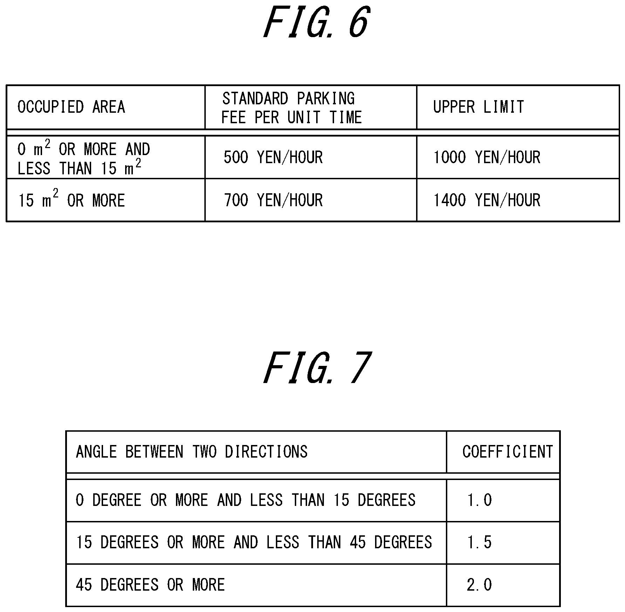

Upon determining the occupied area of the vehicle 2, the information processing apparatus 1 refers to the fee DB illustrated in FIG. 6. In the fee DB, a standard parking fee per unit time and an upper limit are stored in association with the occupied area. The standard parking fee per unit time is a parking fee in a case in which there is no congestion in the vicinity of the vehicle 2. The upper limit is a maximum value of the parking fee in the case of increasing due to the degree of congestion in the vicinity of the vehicle 2. The standard parking fee per unit time and the upper limit can be freely set by a provider of the parking spot P01. The unit time may be any of minutes, hours, days, months, or years.

The parking fee may be set to increase with the degree of congestion in the vicinity. For example, the parking fee may increase by a specified rate (e.g., 100 yen/hour) according to the degree of congestion in the vicinity. As an alternative example, the parking fee may reach the upper limit in a case in which the degree of congestion in the vicinity exceeds a specified value.

As an alternative example, instead of the standard parking fee per unit time and the upper limit, a standard parking fee (e.g., maximum fee) regardless of the length of a parking duration and an upper limit of a parking fee in the case of increasing due to congestion in the vicinity may be stored. As another alternative example, the upper limit of the parking fee may not be set. The parking fee may be fixed regardless of congestion in the vicinity.

The degree of congestion in the vicinity of the vehicle 2 may be, for example, the following values:

- the number of vehicles parked within a predetermined range from the parking spot P01, and/or
- the ratio of used parking spots relative to the total number of parking spots within a predetermined range from the parking spot P01.

The information processing apparatus 1 calculates a parking fee for the vehicle 2. In the example in which the occupied area of the vehicle 2 is 14m$^2$, the information processing apparatus 1 determines that a standard parking fee per unit time for the vehicle 2 is 500 yen/hour.

The information processing apparatus 1 may use a coefficient in calculating the parking fee for the vehicle 2. The information processing apparatus 1 refers to the coefficient DB illustrated in FIG. 7. In the coefficient DB, the coefficient is stored in relation to an angle between two directions. The angle between two directions is an angle between the direction of the vehicle 2 and the direction of travel of the road R on which the vehicle 2 has stopped.

The information processing apparatus 1 acquires, from the sensor 24 of the vehicle 2, information indicating a direction VD01 of the vehicle 2. The information processing apparatus 1 calculates an angle between the direction VD01 of the vehicle 2, which is indicated by the information, and a direction RD01 of travel of the road R. Here, as an example, the calculated angle is 0 degree. The information processing apparatus 1 determines that the coefficient here is 1.0.

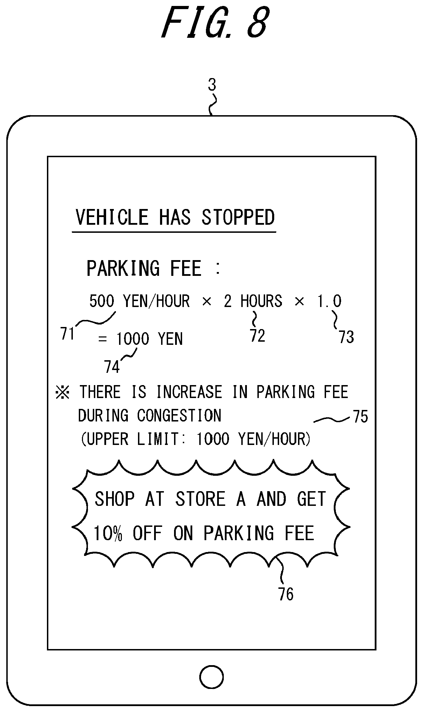

As illustrated in FIG. 8, the information processing apparatus 1 calculates the parking fee by the following equation and notifies the user terminal 3.

$$(\text{parking fee } 74) = (\text{standard parking fee per unit time } 71) \times (\text{parking duration } 72) \times (\text{coefficient } 73)$$

A parking duration 72 may be estimated by the information processing apparatus 1 from a schedule of the user U01. In the case of not being able to estimate, the phrase "parking duration" may be displayed instead of a specific number.

As an alternative example, the vehicle 2, instead of the user terminal 3, may be notified of the calculated parking fee. The vehicle 2 displays the notified parking fee on a display of the vehicle 2.

As illustrated in FIG. 8, the information processing apparatus 1 may display an annotation 75 on e.g. a display of the user terminal 3. The annotation 75 indicates that there is an increase in the parking fee per unit time during congestion and an upper limit of the parking fee per unit time in the case of increase. As an alternative example, the information processing apparatus 1 may calculate and notify the parking fee in the case of applying the upper limit.

Additively or alternatively, the information processing apparatus 1 may notify the user terminal 3 of discount information 76 on the parking fee. Specifically, in a case in which a campaign to discount the parking fee by shopping at a predetermined neighboring store (e.g., a convenience store, a supermarket, a department store, or a shopping arcade) is conducted, the information processing apparatus 1 may display the discount information 76 indicating the contents of the campaign on the user terminal 3. The discount information 76 may include any information such as a discount rate, a discount range, a discounted fee, or a discount coupon.

Additionally or alternatively, in a case in which the parking fee exceeds a reference value that is set by the user U01 in advance, the information processing apparatus 1 may notify the user terminal 3 of a warning indicating that the parking fee exceeds the reference value. As an alternative example, the reference value may be an average, maximum, or minimum value of parking fees for one or more parking spots used by the user U01 in the past.

The information processing apparatus 1 can calculate a parking fee for the vehicle 4 illustrated in FIG. 4 in the same way as for the vehicle 2. The vehicle 4 stops in a parking spot P02. The information processing apparatus 1 acquires, from the vehicle 4, information indicating a direction VD02 of the vehicle 4. The information processing apparatus 1 calculates an angle A02 between the direction VD02 of the vehicle 4 and a direction RD02 of travel of the road R. Here, as an example, the angle A02 is 30 degrees. The information processing apparatus 1 determines, with reference to the coefficient DB, that a coefficient to be applied to the vehicle 4 is 1.5. The information processing apparatus 1 calculates the parking fee for the vehicle 4 in the same way as for the vehicle 2. For convenience of explanation, duplicate descriptions will be omitted.

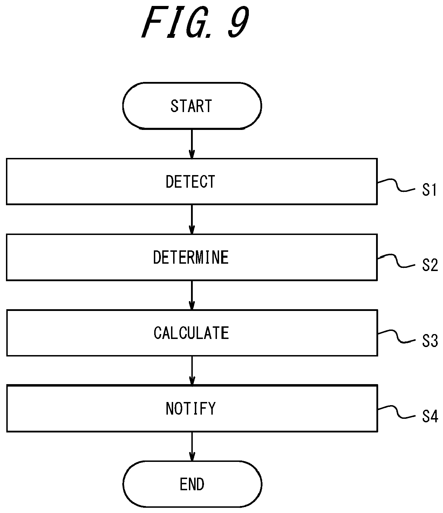

With reference to FIG. 9, an information processing method executed by the information processing apparatus 1 according to the present embodiment will be described.

In step S1, the information processing apparatus 1 detects that the vehicle 2 has stopped.

In step S2, the information processing apparatus 1 determines information regarding the size of the vehicle 2.

In step S3, the information processing apparatus 1 calculates a parking fee according to the information regarding the determined size.

In step S4, the information processing apparatus 1 notifies the vehicle 2 or the user terminal 3 of the calculated parking fee.

As described above, according to the present embodiment, upon detecting a stop of the vehicle 2, the information processing apparatus 1 determines the information regarding the size of the vehicle 2, calculates the parking fee according to the information regarding the size, and notifies the vehicle 2 or the user terminal 3 to be operated by the driver of the vehicle 2 of the parking fee. With this configuration, the information processing apparatus 1 can flexibly calculate the parking fee according to the information regarding the size of the vehicle 2.

Also according to the present embodiment, the controller 11 calculates the parking fee further according to the angle between the direction of the vehicle 2 and the direction of travel of the road on which the vehicle 2 has stopped. With this configuration, the controller 11 can charge the relatively high parking fee, in a case in which the vehicle 2 is parked at an angle to the direction of travel of the road and is preventing parking of another vehicle. Thus, the information processing apparatus 1 can prevent a reduction in parking fee income.

Also according to the present embodiment, the information regarding the size of the vehicle 2 corresponds to at least one of an area, a volume, and/or a vehicle type of the vehicle 2. Also according to the present embodiment, the information processing apparatus 1 calculates the parking fee further according to the degree of congestion in the vicinity of the vehicle 2. With this configuration, the information processing apparatus 1 can calculate the parking fee more flexibly.

Also according to the present embodiment, the parking fee is set to increase according to the degree of congestion and have an upper limit. With this configuration, the information processing apparatus 1 can flexibly increase the parking fee, in a case in which demand for parking is high, to secure parking fee income, while avoiding unexpected surprise to the user U01 of the vehicle 2.

Also according to the present embodiment, in a case in which the information processing apparatus 1 determines that the calculated parking fee exceeds the reference value, the information processing apparatus 1 notifies the vehicle 2 or the user terminal 3 that the parking fee exceeds the reference value. With this configuration, the information processing apparatus 1 can reduce the likelihood that the user U01 inadvertently parks the vehicle 2 in a parking spot with a high parking fee.

According to the present embodiment, the information processing apparatus 1 further notifies the vehicle 2 or the user terminal 3 of the discount information on the parking fee. With this configuration, the information processing apparatus 1 can provide a motivation for the user U01 to use the parking spot.

While the present disclosure has been described with reference to the drawings and examples, it should be noted that various modifications and revisions may be implemented by those skilled in the art based on the present disclosure. Other modifications can be made without departing from the spirit of the present disclosure. For example, functions or the like included in each means or each step can be rearranged without logical inconsistency, and a plurality of means or steps can be combined into one or divided.

For example, in the aforementioned embodiment, a program configured to execute all or some of the functions or processing of the information processing apparatus 1 can be recorded on a computer readable recording medium. The computer readable recording medium includes a non-transitory computer readable medium and may be a magnetic recording apparatus, an optical disc, a magneto-optical recording medium, or a semiconductor memory. The program is distributed, for example, by selling, transferring, or lending a portable recording medium such as a Digital Versatile Disc (DVD) or a Compact Disc Read Only Memory (CD-ROM) on which the program is recorded. The program may also be distributed by storing the program in a storage of any server and transmitting the program from any server to another computer. The program may be provided as a program product. The present disclosure can also be implemented as a program executable by a processor.

The computer temporarily stores in a main memory, for example, a program recorded on a portable recording medium, or a program transferred from the server. Then, the computer reads the program stored in the main memory using a processor, and executes processes in accordance with the read program using the processor. The computer may read a program directly from the portable recording medium, and execute processes in accordance with the program. The computer may, each time a program is transferred from the server to the computer, sequentially execute processes in accordance with the received program. Instead of transferring a program from the server to the computer, processes may be executed by a so-called ASP type service that realizes functions only by execution instructions and result acquisitions. The term "ASP" is an abbreviation of application service provider. Programs encompass information that is to be used for processing by an electronic computer and is thus equivalent to a program. For example, data that is not a direct command to a computer but has a property that regulates processing of the computer is "equivalent to a program" in this context.

**Claims**

1. An information processing apparatus (1) communicably connected to a vehicle (2), the information processing apparatus (1) comprising a controller (11) configured to:

upon detecting a stop of the vehicle (2), determine information regarding a size of the vehicle (2);

calculate a parking fee according to the information regarding the size of the vehicle (2); and

notify the vehicle (2) or a user terminal (3) to be operated by a driver of the vehicle (2) of the parking fee.

2. The information processing apparatus (1) according to claim 1, wherein the controller (11) is configured to calculate the parking fee further according to an angle between a direction of the vehicle (2) and a direction of travel of a road on which the vehicle (2) has stopped.

3. The information processing apparatus (1) according to claim 1 or 2, wherein the information regarding the size of the vehicle (2) corresponds to at least one of an area, a volume, and/or a vehicle type of the vehicle (2).

4. The information processing apparatus (1) according to any one of claims 1 to 3, wherein the controller (11) is configured to calculate the parking fee further according to a degree of congestion in a vicinity of the vehicle (2).

5. The information processing apparatus (1) according to claim 4, wherein the parking fee is set to increase with the degree of congestion and have an upper limit.

6. The information processing apparatus (1) according to any one of claims 1 to 5, wherein the controller (11) is configured to, upon determining that the calculated parking fee exceeds a reference value, notify the vehicle (2) or the user terminal (3) of an excess of the parking fee over the reference value.

7. The information processing apparatus (1) according to any one of claims 1 to 6, wherein the controller (11) is further configured to notify the vehicle (2) or the user terminal (3) of discount information on the parking fee.

8. A vehicle (2) having the information processing apparatus (1) according to any one of claims 1 to 7 mounted therein.

9. A program configured to cause a computer, as an information processing apparatus (1) communicably connected to a vehicle (2), to execute operations, the operations comprising:

upon detecting a stop of the vehicle (2), determining information regarding a size of the vehicle (2);

calculating a parking fee according to the information regarding the size of the vehicle (2); and

notifying the vehicle (2) or a user terminal (3) to be operated by a driver of the vehicle (2) of the parking fee.

10. The program according to claim 9, wherein the operations further comprise calculating the parking fee further according to an angle between a direction of the vehicle (2) and a direction of travel of a road on which the vehicle (2) has stopped.

11. The program according to claim 9 or 10, wherein the information regarding the size of the vehicle (2) corresponds to at least one of an area, a volume, and/or a vehicle type of the vehicle (2).

12. The program according to any one of claims 9 to 11, wherein the operations further comprise calculating the parking fee further according to a degree of congestion in a vicinity of the vehicle (2).

13. The program according to claim 12, wherein the parking fee is set to increase with the degree of congestion and have an upper limit.

14. The program according to any one of claims 9 to 13, wherein the operations further comprise, upon determining that the calculated parking fee exceeds a reference value, notifying the vehicle (2) or the user terminal (3) of an excess of the parking fee over the reference value.

15. An information processing method performed by an information processing apparatus (1) communicably connected to a vehicle (2), the information processing method comprising:

upon detecting a stop of the vehicle (2), determining information regarding a size of the vehicle (2);

calculating a parking fee according to the information regarding the size of the vehicle (2); and

notifying the vehicle (2) or a user terminal (3) to be operated by a driver of the vehicle (2) of the parking fee.

# FIG. 1

*FIG. 2*

```
┌─────────────────────────────────────────┐
│              ╭~ 1                         │
│  INFORMATION PROCESSING APPARATUS         │
│                                           │
│   ┌─────────────────────────┐             │
│   │      CONTROLLER         │╌~ 11        │
│   └─────────────────────────┘             │
│                                           │
│   ┌─────────────────────────┐             │
│   │ COMMUNICATION INTERFACE  │╌~ 12       │
│   └─────────────────────────┘             │
│                                           │
│   ┌─────────────────────────┐             │
│   │        MEMORY           │╌~ 13        │
│   └─────────────────────────┘             │
│                                           │
└─────────────────────────────────────────┘
```

*FIG. 3*

```
┌─────────────────────────────────────────┐
│              ╭~ 2                         │
│              VEHICLE                      │
│                                           │
│   ┌─────────────────────────┐             │
│   │      CONTROLLER         │╌~ 21        │
│   └─────────────────────────┘             │
│                                           │
│   ┌─────────────────────────┐             │
│   │ COMMUNICATION INTERFACE  │╌~ 22       │
│   └─────────────────────────┘             │
│                                           │
│   ┌─────────────────────────┐             │
│   │        MEMORY           │╌~ 23        │
│   └─────────────────────────┘             │
│                                           │
│   ┌─────────────────────────┐             │
│   │        SENSOR           │╌~ 24        │
│   └─────────────────────────┘             │
│                                           │
└─────────────────────────────────────────┘
```

# FIG. 4

# FIG. 5

# FIG. 6

| OCCUPIED AREA | STANDARD PARKING FEE PER UNIT TIME | UPPER LIMIT |
|---|---|---|
| 0 m$^2$ OR MORE AND LESS THAN 15 m$^2$ | 500 YEN/HOUR | 1000 YEN/HOUR |
| 15 m$^2$ OR MORE | 700 YEN/HOUR | 1400 YEN/HOUR |

# FIG. 7

| ANGLE BETWEEN TWO DIRECTIONS | COEFFICIENT |
|---|---|
| 0 DEGREE OR MORE AND LESS THAN 15 DEGREES | 1.0 |
| 15 DEGREES OR MORE AND LESS THAN 45 DEGREES | 1.5 |
| 45 DEGREES OR MORE | 2.0 |

# FIG. 8

3

VEHICLE HAS STOPPED

PARKING FEE :

500 YEN/HOUR × 2 HOURS × 1.0

71  = 1000 YEN    72    73

74

※ THERE IS INCREASE IN PARKING FEE
DURING CONGESTION ～75
(UPPER LIMIT: 1000 YEN/HOUR)

SHOP AT STORE A AND GET

10% OFF ON PARKING FEE

76

# FIG. 9

```
        ┌─────────────┐
        │    START    │
        └──────┬──────┘
               │
               ▼
  ┌──────────────────────────┐
  │          DETECT          │──── S1
  └─────────────┬────────────┘
               │
               ▼
  ┌──────────────────────────┐
  │        DETERMINE         │──── S2
  └─────────────┬────────────┘
               │
               ▼
  ┌──────────────────────────┐
  │        CALCULATE         │──── S3
  └─────────────┬────────────┘
               │
               ▼
  ┌──────────────────────────┐
  │          NOTIFY          │──── S4
  └─────────────┬────────────┘
               │
               ▼
        ┌─────────────┐
        │     END     │
        └─────────────┘
```

Europäisches
Patentamt

European
Patent Office

Office européen
des brevets

# EUROPEAN SEARCH REPORT

Application Number

EP 21 21 1504

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2011/313822 A1 (BURDICK JOSHUA [US])<br>22 December 2011 (2011-12-22)<br>* abstract *<br>* paragraph [0007] – paragraph [0016] *<br>* paragraph [0026] – paragraph [0040] *<br>* claims; figures * | 1,3-9,<br>11-15<br>2,10 | INV.<br>G07B15/02<br>G06Q30/02 |
| X | US 2016/148513 A1 (BEAUREPAIRE JEROME [DE]) 26 May 2016 (2016-05-26)<br>* abstract *<br>* paragraph [0030] – paragraph [0078] *<br>* figures * | 1,3-9,<br>11-15 | |
| X | JP 2020 027354 A (NIPPON SIGNAL CO LTD)<br>20 February 2020 (2020-02-20)<br>* paragraph [0005] – paragraph [0032] *<br>* figures 1-3 * | 1,9,15 | |
| Y | EP 3 342 682 A1 (HYUNDAI MOTOR CO LTD [KR]; KIA MOTORS CORP [KR])<br>4 July 2018 (2018-07-04)<br>* paragraphs [0008], [0016] *<br>* paragraph [0029] – paragraph [0037] *<br>* paragraph [0063] * | 2,10 | TECHNICAL FIELDS SEARCHED (IPC)<br><br>G07B<br>G06Q |
| A | JP 2020 009462 A (PIONEER ELECTRONIC CORP)<br>16 January 2020 (2020-01-16)<br>* abstract; claims; figures * | 1,4,5,<br>12,13 | |

The present search report has been drawn up for all claims

| Place of search | Date of completion of the search | Examiner |
|---|---|---|
| The Hague | 12 April 2022 | Miltgen, Eric |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 21 1504

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2022

| Patent document cited in search report | | Publication date | Patent family member(s) | | Publication date |
|---|---|---|---|---|---|
| US 2011313822 | A1 | 22-12-2011 | NONE | | |
| US 2016148513 | A1 | 26-05-2016 | NONE | | |
| JP 2020027354 | A | 20-02-2020 | NONE | | |
| EP 3342682 | A1 | 04-07-2018 | CN | 108263375 A | 10-07-2018 |
| | | | EP | 3342682 A1 | 04-07-2018 |
| | | | KR | 20180078975 A | 10-07-2018 |
| JP 2020009462 | A | 16-01-2020 | JP | 2020009462 A | 16-01-2020 |
| | | | JP | 2021177414 A | 11-11-2021 |

EPO FORM P0459

For more details about this annex : see Official Journal of the European Patent Office, No. 12/82

## REFERENCES CITED IN THE DESCRIPTION

**Patent documents cited in the description**

• JP 2011065239 A